# EUROPEAN PATENT APPLICATION

(11) **EP 4 681 799 A1**
(43) Date of publication of application: **21.01.2026**
(21) Application number: 24774734.8
(22) Date of filing: 11.03.2024
(51) Int. Cl.: B01D 53/14, A23L 3/3436, B01J 20/02, B01J 20/30

(54) **DEOXYGENATION AGENT COMPOSITION, PRODUCTION METHOD FOR SAME, AND DEOXYGENATION AGENT PACKAGE**

(30) Priority: 17.03.2023 JP 2023042962
(71) Applicant: MITSUBISHI GAS CHEMICAL COMPANY, INC., Chiyoda-ku Tokyo 100-8324 (JP)
(72) Inventor: SATO, Daiki, Tokyo 125-8601 (JP)
(74) Representative: Müller-Boré & Partner Patentanwälte PartG mbB
(86) International application number: PCT/JP2024/009215
(87) International publication number: WO 2024/195595

(57) **Abstract**

Provided herein is an oxygen scavenger composition containing iron powder, an alkaline earth metal halide, water, an alkaline substance, a water-retaining carrier, and one or more water-soluble solvents selected from the group consisting of monohydric to trihydric alcohols (excluding polyether polyols) each having a molecular weight of 100 or less and polyethers each having a number average molecular weight of 900 or less, in which the content of the alkaline earth metal halide is 30 parts by mass or more and 80 parts by mass or less per 100 parts by mass of the content of the water, and the content of the water-soluble solvent is 2 parts by mass or more and 80 parts by mass or less per 100 parts by mass of the content of the water.

## Description

### Technical Field

The present invention relates to an oxygen scavenger composition, a method for producing the same, and an oxygen scavenger package.

### Background Art

In the known art, there has been proposed an oxygen scavenger (hereinafter, referred to as an "iron-based oxygen scavenger") using the oxidation reaction of iron powder. A commercially available oxygen scavenger (for example, trade name "AGELESS", available from MITSUBISHI GAS CHEMICAL COMPANY, INC.) can be stored in a gas barrier container in a sealed manner together with an article such as food or a pharmaceutical to remove oxygen in the container, and hence has been already used widely for maintaining quality and freshness of the article.

Examples of the iron-based oxygen scavenger include: a "moisture-dependent type" oxygen scavenger that initiates oxygen absorption by using moisture evaporated from a stored article or the like; and a "self-reactive type" oxygen scavenger in which moisture necessary for the oxygen absorption reaction of iron is included in advance in the oxygen scavenger composition.

In the "self-reactive type" oxygen scavenger, the presence of a moisture donor such as an inorganic filler impregnated with moisture in the oxygen scavenger composition enables moisture necessary for the oxygen absorption reaction of iron to be supplemented from the moisture donor to the iron.

However, the "self-reactive type" oxygen scavenger has a problem concerning hydrogen generation caused by the reaction between water and iron powder in the oxygen scavenger during storage or transportation.

Usually, the oxygen scavenger is accommodated and stored in a gas barrier bag until it is used so as not to react with oxygen in the atmosphere. However, if hydrogen is generated in such a storage state, the gas barrier bag may expand to cause a poor appearance resulting in deformation or a slow deaeration resulting in a poorly deaerated state of the gas barrier bag.

As one method for solving such a problem concerning hydrogen generation, a method is known in which an alkaline substance such as calcium hydroxide is added to an oxygen scavenger composition to keep a water film on the surface of iron powder, which is a reaction field of a deoxidation reaction, alkaline, thereby suppressing generation of hydrogen (Patent Document 1).

### Citation List

### Patent Document

Patent Document 1: JP 2013-146668 A

### Summary of Invention

### Technical Problem

However, an oxygen scavenger composition exhibiting an intermediate water activity uses a large amount of a metal salt such as a metal halide. For this reason, the surface of iron powder is in a state susceptible to erosion by the metal salt, and the above-mentioned problem concerning hydrogen generation becomes more significant.

Furthermore, when an alkaline substance is added together with a large amount of the metal salt, the metal salt and the alkaline substance react with each other to precipitate the reaction product. As a result, it becomes difficult to keep the water film on the surface of the iron powder alkaline, so that the effect of suppressing hydrogen generation is not obtained, and it is also difficult to maintain an intermediate water activity.

For this reason, there has been a demand for an oxygen scavenger composition capable of suppressing generation of hydrogen and exhibiting excellent oxygen absorption performance while maintaining an intermediate water activity.

Therefore, an object of the present invention is to provide an oxygen scavenger composition which is excellent in oxygen absorption performance and generates a small amount of hydrogen while maintaining an intermediate water activity, a method for producing the oxygen scavenger composition, and an oxygen scavenger package.

### Solution to Problem

That is, the essential constitution of the present invention is as follows.
[1] An oxygen scavenger composition containing iron powder, an alkaline earth metal halide, water, an alkaline substance, a water-retaining carrier, and one or more water-soluble solvents selected from the group consisting of monohydric to trihydric alcohols (excluding polyether polyols) each having a molecular weight of 100 or less and polyethers each having a number average molecular weight of 900 or more,
   in which a content of the alkaline earth metal halide is 30 parts by mass or more and 80 parts by mass or less per 100 parts by mass of a content of the water, and
   a content of the water-soluble solvent is 2 parts by mass or more and 80 parts by mass or less per 100 parts by mass of the content of the water.
[2] The oxygen scavenger composition according to [1], in which the water-soluble solvent is one or more selected from the group consisting of methanol, ethanol, propanol, propanediol, glycerin, butanol, butanediol, and polyethylene glycol and polypropylene glycol each having a number average molecular weight of 900 or less.
[3] The oxygen scavenger composition according to [1] or [2], in which the alkaline substance is one or more selected from the group consisting of alkali metal hydroxides and alkaline earth metal hydroxides.
[4] The oxygen scavenger composition according to any one of [1] to [3], in which the alkaline substance is calcium hydroxide.
[5] The oxygen scavenger composition according to any one of [1] to [4], in which the alkaline earth metal halide is one or more selected from the group consisting of calcium chloride, magnesium chloride, magnesium bromide, and calcium bromide.
[6] The oxygen scavenger composition according to any one of [1] to [5], in which the water-retaining carrier is one or more selected from the group consisting of diatomaceous earth, silica, and activated carbon.
[7] The oxygen scavenger composition according to any one of [1] to [6], in which a content of the water-retaining carrier is 15 parts by mass or more and 50 parts by mass or less per 100 parts by mass of a content of the iron powder.
[8] The oxygen scavenger composition according to any one of [1] to [7], in which the content of the water is 60 parts by mass or more and 370 parts by mass or less per 100 parts by mass of the content of the water-retaining carrier.
[9] The oxygen scavenger composition according to any one of [1] to [8], further including a thickener, in which the thickener is one or more selected from the group consisting of carboxymethyl cellulose calcium, carboxymethyl cellulose sodium, calcium bentonite, and sodium bentonite.
[10] The oxygen scavenger composition according to [9], in which a content of the thickener is 5 parts by mass or more and 20 parts by mass or less per 100 parts by mass of the content of the water.
[11] An oxygen scavenger package including: the oxygen scavenger composition according to any one of [1] to [10]; and an air-permeable packaging material accommodating the oxygen scavenger composition.
[12] A method for producing an oxygen scavenger composition, the method for producing the oxygen scavenger composition described in any one of [1] to [10], the method including:
   step (I) of obtaining a solution containing an alkaline earth metal halide, water, and one or more water-soluble solvents selected from the group consisting of monohydric to trihydric alcohols (excluding polyether polyols) each having a molecular weight of 100 or less and polyethers each having a number average molecular weight of 900 or less;
   step (II) of obtaining a mixture containing iron powder, a water-retaining carrier, and an alkaline substance; and
   step (III) of mixing the mixture with the solution.

### Advantageous Effects of Invention

According to the present invention, there can be provided an oxygen scavenger composition which is excellent in oxygen absorption performance and generates a small amount of hydrogen, while maintaining an intermediate water activity, a method for producing the oxygen scavenger composition, and an oxygen scavenger package.

### Description of Embodiments

Embodiments of an oxygen scavenger composition, a method for producing the oxygen scavenger composition, and an oxygen scavenger package according to the present invention will be described in detail below.

Note that, as used herein, a wording of "A to B" indicating a numerical range means "A or more and B or less" (in the case of A < B), or "A or less and B or more" (in the case of A > B). Furthermore, in the present invention, a combination of preferable aspects is a more preferable aspect.

### Oxygen scavenger composition

The oxygen scavenger composition of the present invention contains iron powder, an alkaline earth metal halide, water, an alkaline substance, a water-retaining carrier, and one or more water-soluble solvents selected from the group consisting of monohydric to trihydric alcohols (excluding polyether polyols) each having a molecular weight of 100 or less and polyethers each having a number average molecular weight of 900 or less, in which the content of the alkaline earth metal halide is 30 parts by mass or more and 80 parts by mass or less per 100 parts by mass of the content of the water, and the content of the water-soluble solvent is 2 parts by mass or more and 80 parts by mass or less per 100 parts by mass of the content of the water.

The oxygen scavenger composition of the present invention has the above-mentioned constitution, and thus can exhibit excellent oxygen absorption performance and suppress generation of hydrogen, while maintaining an intermediate water activity.

Note that, as used herein, the term "intermediate water activity" means that water activity is within a range of "0.4 or more and 0.6 or less".

The reason why the oxygen scavenger composition of the present invention exhibits the above-mentioned effect is not clear, but one possible reason is as follows.

The oxygen scavenger composition of the present invention is characterized by containing one or more water-soluble solvents selected from the group consisting of monohydric to trihydric alcohols (excluding polyether polyols) each having a molecular weight of 100 or less and polyethers each having a number average molecular weight of 900 or less. It is presumable that the inclusion of the predetermined water-soluble solvent can increase the solubility of a reaction product derived from the alkaline earth metal halide and the alkaline substance, thereby enabling the suppression of the precipitation of the reaction product. It is presumable that, as a result, the water film on the surface of the iron powder can be kept alkaline, so that generation of hydrogen can be effectively suppressed, and the intermediate water activity of the oxygen scavenger composition can also be maintained.

Hereinafter, each component and the like will be described.

### (Iron powder)

The oxygen scavenger composition of the present invention contains iron powder.

The iron powder in the oxygen scavenger composition of the present invention is a main agent for a deoxidation reaction.

The iron powder is not particularly limited, but preferably iron powder having an exposed surface of iron (0-valent metallic iron), and may be iron powder having an extremely thin oxide film like a normal metal surface as long as the effect of the present invention is not impeded. Specifically, reduced iron powder, electrolytic iron powder, sprayed iron powder (atomized iron powder), or the like can be suitably used. Furthermore, a pulverized product or a cut product of cast iron or the like can also be used.

One type of iron powder can be used singly, or two or more types thereof can be used in combination as necessary. Furthermore, commercial products of the iron powder are readily available and can also be used.

The average particle diameter (D50) of the iron powder is, for example, 3000 µm or less, preferably 1000 µm or less, more preferably 500 µm or less, and still more preferably 300 µm or less from the viewpoint of improving contact with oxygen, and preferably 1 µm or more, more preferably 10 µm or more, and still more preferably 20 µm or more from the viewpoint of suppressing generation of dust. Specifically, the average particle diameter (D50) of the iron powder is preferably from 1 to 1000 µm, more preferably from 10 to 500 µm, and still more preferably from 20 to 300 µm.

Note that, as the iron powder having an average particle diameter within the range set forth above, commercially available iron powder can be selected as appropriate and obtained. Alternatively, the iron powder can also be obtained, for example, by classification using a sieve corresponding to a desired average particle diameter.

The average particle diameter of the iron powder can be measured by a method described in Examples.

The specific surface area of the iron powder is preferably 0.03 m²/g or more, more preferably 0.05 m²/g or more from the viewpoint of oxygen absorption performance, and is preferably 0.50 m²/g or less, more preferably 0.20 m²/g or less from the viewpoint of suppressing generation of dust. Specifically, the specific surface area of the iron powder is preferably from 0.03 to 0.50 m²/g, and more preferably from 0.05 to 0.20 m²/g.

Note that, the specific surface area of the iron powder can be measured by the method described in Examples.

The content of the iron powder is not particularly limited, but is preferably 15 mass% or more and 75 mass% or less, more preferably 30 mass% or more and 60 mass% or less, and still more preferably 40 mass% or more and 55 mass% or less in the oxygen scavenger composition.

### (Alkaline earth metal halide)

The oxygen scavenger composition of the present invention contains an alkaline earth metal halide.

The alkaline earth metal halide in the oxygen scavenger composition of the present invention is a substance that catalyzes the oxidation reaction of iron powder to improve the activity of the iron powder. In addition, the alkaline earth metal halide plays a role in preventing evaporation and loss of water contained in the oxygen scavenger composition, and exhibits an effect of suppressing moisture migration to a stored article.

In order for iron to absorb oxygen, it is necessary to attract moisture to the surface of iron, for which the deliquescence phenomenon of a metal salt is utilized.

An alkaline earth metal halide is a deliquescent metal salt, which has a higher solubility in water as compared with an alkali metal halide and the like, and readily lowers water activity, and thus is effective in the preparation of an oxygen scavenger composition (bulk powder) with an intermediate water activity.

Note that, the alkaline earth metal halide is preferably is contained in the oxygen scavenger composition in the form of an aqueous solution dissolved in water.

The alkaline earth metal halide is not particularly limited, and examples thereof include a chloride, a bromide, and an iodide of an alkaline earth metal, and preferably one or more selected from the group consisting of chlorides and bromides of an alkaline earth metal.

Among them, from the viewpoint of handleability, safety, and the like, the alkaline earth metal halide is preferably one or more selected from the group consisting of calcium chloride, magnesium chloride, magnesium bromide, and calcium bromide, more preferably one or more selected from the group consisting of calcium chloride and magnesium chloride, and still more preferably calcium chloride.

As the alkaline earth metal halide, one type thereof can be used singly, and two or more types thereof can be used in combination as necessary. In addition, commercial products of the above-mentioned alkaline earth metal halides are readily available and can also be used.

The content of the alkaline earth metal halide is 30 parts by mass or more and 80 parts by mass or less, preferably 40 parts by mass or more and 70 parts by mass or less, and more preferably 50 parts by mass or more and 60 parts by mass or less per 100 parts by mass of the water content. When the content is within the range set forth above, there can be obtained an oxygen scavenger composition that exhibits an intermediate water activity, is excellent in oxygen absorption performance and generates a small amount of hydrogen.

In addition, the content of the alkaline earth metal halide in the oxygen scavenger composition is preferably 1 mass% or more and 40 mass% or less, more preferably 5 mass% or more and 20 mass% or less, and still more preferably 7 mass% or more and 15 mass% or less. Furthermore, the content of the alkaline earth metal halide is 1 part by mass or more and 60 parts by mass or less, preferably 5 parts by mass or more and 40 parts by mass or less, and more preferably 10 parts by mass or more and 30 parts by mass or less per 100 parts by mass of the content of the iron powder.

### (Water)

The oxygen scavenger composition of the present invention contains water.

The water contained in the oxygen scavenger composition of the present invention is an essential component to proceed a deoxidation reaction.

The content of water is not particularly limited, but is preferably 60 parts by mass or more and 370 parts by mass or less, more preferably 60 parts by mass or more and 200 parts by mass or less, still more preferably 65 parts by mass or more and 160 parts by mass or less, and even more preferably 70 parts by mass or more and 150 parts by mass or less per 100 parts by mass of the content of the water-retaining carrier. When the content is within the range set forth above, there can be obtained an oxygen scavenger composition that exhibits an intermediate water activity, is excellent in oxygen absorption performance and generates a small amount of hydrogen.

In addition, the content of water in the oxygen scavenger composition is preferably 1 mass% or more and 60 mass% or less, more preferably 5 mass% or more and 40 mass% or less, and still more preferably 10 mass% or more and 30 mass% or less. Furthermore, the content of water is 10 parts by mass or more and 70 parts by mass or less, preferably 20 parts by mass or more and 55 parts by mass or less, and more preferably 30 parts by mass or more and 45 parts by mass or less per 100 parts by mass of the content of iron powder.

### (Alkaline substance)

The oxygen scavenger composition of the present invention contains an alkaline substance.

The alkaline substance in the oxygen scavenger composition of the present invention plays a role in keeping a surface of iron (in particular, moisture present on the surface) alkaline. This can presumably reduce the hydrogen ion concentration in the reaction water during the oxygen absorption reaction on the surface of iron, and effectively suppress generation of hydrogen due to reduction of hydrogen ions by iron.

The alkaline substance is not particularly limited, and is preferably one or more selected from the group consisting of alkali metal hydroxides, alkaline earth metal hydroxides, and salts composed of a weak acid and a strong base, more preferably one or more selected from the group consisting of alkali metal hydroxides and alkaline earth metal hydroxides, and still more preferably an alkaline earth metal hydroxide.

Examples of the alkali metal hydroxides include potassium hydroxide and sodium hydroxide, and among these, sodium hydroxide is preferable.

Examples of the alkaline earth metal hydroxides include calcium hydroxide and magnesium hydroxide, and among these, calcium hydroxide is preferable.

Examples of the salt composed of a weak acid and a strong base include phosphate salts, citrate salts, carbonate salts and hydrogen carbonate salts, and among these, phosphate salts and citrate salts are preferable. Specific examples of the salt composed of a weak acid and a strong base include trisodium phosphate, trisodium citrate, sodium hydrogen carbonate, and sodium carbonate; and trisodium phosphate and trisodium citrate are preferable.

As the alkaline substance, one type thereof can be used singly, or two or more types thereof can be used in combination as necessary. In addition, commercial products of these alkaline substances are readily available and can also be used.

Note that, it is generally known that the oxidation rate of iron is affected by pH, and the oxidation rate of iron tends to decrease in a high pH region. For this reason, from the viewpoint of maintaining high oxygen absorption performance, as the alkaline substance, it is more preferable to use calcium hydroxide (slaked lime) that has suitable solubility and can also function as a pH adjusting agent.

The content of the alkaline substance is not particularly limited, and is preferably 0.2 parts by mass or more and 10 parts by mass or less, more preferably 0.3 parts by mass or more and 5 parts by mass or less, and still more preferably 0.5 parts by mass or more and 3 parts by mass or less per 100 parts by mass of the content of the iron powder. When the content is within the range set forth above, there can be obtained an oxygen scavenger composition that is excellent in oxygen absorption performance and generates a small amount of hydrogen while exhibiting an intermediate water activity.

In addition, the content of the alkaline substance in the oxygen scavenger composition is preferably 0.05 mass% or more and 10 mass% or less, more preferably 0.1 mass% or more and 5 mass% or less, and still more preferably 0.2 mass% or more and 1 mass% or less.

### (Water-retaining carrier)

The oxygen scavenger composition of the present invention contains a water-retaining carrier.

The water-retaining carrier in the oxygen scavenger composition of the present invention is a carrier capable of being impregnated with water and thereby holding (retaining) water, and plays a role in supplying the held water to the surroundings, particularly to the iron powder, as necessary.

Such a water-retaining carrier is not particularly limited as long as it can retain water, but is preferably one or more selected from the group consisting of porous materials and superabsorbent polymers, and more preferably a porous material.

The porous material may be a material having a porous structure and having a water retention function, and examples thereof include diatomaceous earth, zeolite, sepiolite, cristobalite, porous glass, silica, activated clay, acid clay, activated carbon, vermiculite, and wood powder. Among them, one or more selected from the group consisting of diatomaceous earth, silica, and activated carbon are preferable.

In particular, activated carbon is more preferable in terms of having a function of promoting the oxidation reaction of iron in addition to the water retention function. The type of the activated carbon is not particularly limited, and any types of wood, coconut shell, coal, and the like can be used for the raw materials of the activated carbon, but from the viewpoint of using the oxygen scavenger composition of the present invention for food, one or more types selected from the group consisting of wood and coconut shell are preferable.

The superabsorbent resin may be a resin that can solidify a liquid such as water into a gel state, and examples thereof include polyacrylate salt-based resins, polysulfonate salt-based resins, polyacrylamide-based resins, polyvinyl alcohol-based resins, starch-based resins, cellulose-based resins, and polyalginate-based resins.

One type of the water-retaining carriers listed above can be used singly, or two or more types thereof can be used in combination as necessary. Furthermore, commercial products of these water-retaining carriers are readily available and can also be used.

From the viewpoint of further enhancing the water retention function, the water-retaining carrier is preferably one or more selected from the group consisting of diatomaceous earth, silica, and activated carbon, more preferably activated carbon and one or more selected from the group consisting of diatomaceous earth and silica, and even more preferably activated carbon and diatomaceous earth.

In addition, the properties of the water-retaining carrier are not particularly limited, but a material having high flowability in a powder form is suitably used from the viewpoint of handleability during the production of the oxygen scavenger composition, and the particle shape of the water-retaining carrier is more preferably a nearly spherical shape.

In addition, the water-retaining carrier in a powder form preferably has an average particle diameter of 0.05 µm or more and 1000 µm or less, and more preferably 0.1 µm or more and 100 µm or less from the viewpoint of ease of handleability during the production of the oxygen scavenger composition.

In particular, when the water-retaining carrier is activated carbon, its average particle diameter is more preferably 1 µm or more and 100 µm or less, and even more preferably 1 µm or more and 50 µm or less.

When the water-retaining carrier is diatomaceous earth, its average particle diameter is more preferably 0.2 µm or more and 50 µm or less, and even more preferably 0.2 µm or more and 10 µm or less.

Any particles of the water-retaining carrier having a particle size in the range set forth above can be used regardless of whether they are primary particles, agglomerated particles, or granulated materials. One type of the water-retaining carrier having a particle size in the range set forth above can be used singly, or a plurality of types thereof having different particle sizes can be mixed at any ratio and used. Commercial products of such water-retaining carrier are readily available and can also be used.

Note that, the average particle diameter of the water-retaining carrier can be measured by the method described in Examples.

The content of the water-retaining carrier is not particularly limited, but is preferably 15 parts by mass or more and 50 parts by mass or less, more preferably 20 parts by mass or more and 45 parts by mass or less, and still more preferably 25 parts by mass or more and 40 parts by mass or less per 100 parts by mass of the content of iron powder. When the content is within the range set forth above, there can be obtained an oxygen scavenger composition that exhibits an intermediate water activity, is excellent in oxygen absorption performance and generates a small amount of hydrogen.

In addition, the content of the water-retaining carrier in the oxygen scavenger composition is preferably 1 mass% or more and 40 mass% or less, more preferably 5 mass% or more and 30 mass% or less, and still more preferably 10 mass% or more and 20 mass% or less.

### (Water-soluble solvent)

The oxygen scavenger composition of the present invention contains one or more water-soluble solvents selected from the group consisting of monohydric to trihydric alcohols (excluding polyether polyols) each having a molecular weight of 100 or less and polyethers each having a number average molecular weight of 900 or less.

The predetermined water-soluble solvent in the oxygen scavenger composition of the present invention can increase the solubility of a reaction product derived from the alkaline earth metal halide and the alkaline substance, and plays a role in suppressing the precipitation of the reaction product.

Examples of the monohydric to trihydric alcohols (excluding polyether polyols) each having a molecular weight of 100 or less include methanol, ethanol, propanol (1-propanol, 2-propanol), propanediol (1,2-propanediol, 1,3-propanediol), glycerin, butanol (1-butanol, 2-methyl-1-propanol, 2-butanol, 2-methyl-2-propanol), and butanediol (1,2-butanediol, 1,3-butanediol, 1,4-butanediol, 2,3-butanediol). Among these, from the viewpoint of exhibiting high oxygen absorption performance, from the viewpoint of availability, and from the viewpoint of safety when it is intended to be used as a freshness retaining agent in the vicinity of food, one or more selected from the group consisting of ethanol, propanol, propanediol, and glycerin are preferable, and one or more selected from the group consisting of ethanol and glycerin are more preferable. In particular, ethanol is more preferable from the viewpoint of exhibiting high oxygen absorption performance, and glycerin is more preferable from the viewpoint of exhibiting an effect of suppressing hydrogen generation.

Examples of the polyether having a number average molecular weight of 900 or less include polyethylene glycol, polypropylene glycol, and polytetramethylene ether glycol. Among these, from the viewpoint of exhibiting high oxygen absorption performance and from the viewpoint of availability, one or more selected from the group consisting of polyethylene glycol and polypropylene glycol are preferred, and polyethylene glycol is more preferred. Note that, the number average molecular weight of the polyether is not particularly limited as long as it is 900 or less, but is preferably 600 or less, more preferably 500 or less, still more preferably 400 or less, and preferably 200 or more.

In particular, the water-soluble solvent is preferably one or more selected from the group consisting of methanol, ethanol, propanol, propanediol, glycerin, butanol, butanediol, polyethylene glycol having a number average molecular weight of 900 or less, and polypropylene glycol having a number average molecular weight of 900 or less, more preferably one or more selected from the group consisting of ethanol, propanol, propanediol, glycerin, polyethylene glycol having a number average molecular weight of 900 or less, and polypropylene glycol having a number average molecular weight of 900 or less, further preferably one or more selected from the group consisting of ethanol, glycerin, and polyethylene glycol having a number average molecular weight of 900 or less, and in terms of an excellent effect of suppressing hydrogen generation, of affordable price, and also of manageability, glycerin is further preferable.

One type of the water-soluble solvent can be used singly, or two or more types thereof can be used in combination as necessary. Commercial products of the above-mentioned water-soluble solvents are readily available and can also be used.

The content of the water-soluble solvent is 2 parts by mass or more and 80 parts by mass or less, preferably 5 parts by mass or more and 75 parts by mass or less, more preferably 5 parts by mass or more and 65 parts by mass or less, still more preferably 10 parts by mass or more and 60 parts by mass or less, even more preferably 20 parts by mass or more and 60 parts by mass or less, and even more preferably 40 parts by mass or more and 60 parts by mass or less, per 100 parts by mass of the content of the water. When the content is within the range set forth above, there can be obtained an oxygen scavenger composition that exhibits an intermediate water activity, is excellent in oxygen absorption performance and generates a small amount of hydrogen.

In addition, the content of the water-soluble solvent in the oxygen scavenger composition is preferably 0.5 mass% or more and 30 mass% or less, more preferably 1 mass% or more and 15 mass% or less, still more preferably 1.5 mass% or more and 15 mass% or less, even more preferably 3 mass% or more and 15 mass% or less, and even more preferably 8 mass% or more and 15 mass% or less. Furthermore, the content of the water-soluble solvent is preferably 0.5 parts by mass or more and 50 parts by mass or less, more preferably 1 part by mass or more and 25 parts by mass or less, still more preferably 3 parts by mass or more and 25 parts by mass or less, even more preferably 5 parts by mass or more and 25 parts by mass or less, and even more preferably 15 parts by mass or more and 25 parts by mass or less per 100 parts by mass of the content of the iron powder.

### (Thickener)

The oxygen scavenger composition of the present invention preferably further contains a thickener.

The thickener in the oxygen scavenger composition of the present invention is a substance that swells by moisture and has a binding function for retaining the shape of granulated materials, and specifically is dissolved or dispersed in a liquid such as an aqueous solution, thereby playing a role in increasing the viscosity of the solution.

The thickener is preferably used in a substantially dry state or in a semi-swollen or swollen state in which a small amount to a necessary amount of water is absorbed.

Such a thickener is not particularly limited as long as it has a binding function, and for example, a binding agent, a pressure-sensitive adhesive, a binder, or the like can also be used besides a known swelling agent used for food and the like.

The thickener may be either an inorganic thickener or an organic thickener.

Examples of the inorganic thickener include clay minerals such as sodium bentonite, calcium bentonite, and sodium montmorillonite. Clay minerals are preferable in terms of affordable price and also being excellent in performance. Clay minerals are also known as inorganic soaps and also function as lubricants. Furthermore, clay minerals swollen by water are known to exhibit high thixotropy and exhibit excellent binding properties. Among them, bentonites such as calcium bentonite and sodium bentonite are preferable from the viewpoint of affordable price and strong binding force.

Examples of the organic thickener include: organic bentonite; natural products such as defatted frozen bean curd, agar, starch, dextrin, gum arabic, gelatin, and casein; semi-synthetic products such as crystalline cellulose, carboxymethyl cellulose, carboxymethyl cellulose sodium, carboxymethyl cellulose calcium, hydroxyethyl cellulose, lignin sulfonic acid, and hydroxyethylated starch; and synthetic products such as water-insoluble polyvinyl alcohol and polyvinyl methyl ether. Among them, cellulose-based semi-synthetic products such as crystalline cellulose, carboxymethyl cellulose, carboxymethyl cellulose sodium, carboxymethyl cellulose calcium, and hydroxyethyl cellulose are preferable from the viewpoint of exhibiting excellent swelling properties, and carboxymethyl cellulose, carboxymethyl cellulose sodium, and carboxymethyl cellulose calcium are preferable from the viewpoint of affordable price and strong binding force.

One type of the thickeners listed above can be used singly, or two or more types thereof can be used in combination as necessary. Furthermore, commercial products of these thickeners are readily available and can also be used.

The thickener is preferably one or more selected from the group consisting of clay minerals and cellulose-based semi-synthetic products, and from the viewpoints of affordable price and strong binding force, it is more preferably one or more selected from the group consisting of bentonites and cellulose-based semi-synthetic products.

More specifically, the thickener is preferably one or more selected from the group consisting of carboxymethyl cellulose calcium, carboxymethyl cellulose sodium, calcium bentonite, and sodium bentonite.

One type of the thickeners listed above can be used singly, or two or more types thereof can be used in combination as necessary. As these thickeners, commercial products thereof may be used.

The average particle diameter of the thickener is preferably 1 µm or more and 100 µm or less, more preferably 5 µm or more and 50 µm or less, and still more preferably 10 µm or more and 50 µm or less from the viewpoints of suppressing generation of dust and improving binding function.

Note that, the average particle diameter of the thickener can be measured by the method described in Examples.

The content of the thickener is not particularly limited, but is preferably 5 parts by mass or more and 20 parts by mass or less, and more preferably 10 parts by mass or more and 15 parts by mass or less, per 100 parts by mass of the content of the water. When the content is within the range set forth above, there can be obtained an oxygen scavenger composition that exhibits an intermediate water activity, is excellent in oxygen absorption performance and generates a small amount of hydrogen.

In addition, the content of the thickener in the oxygen scavenger composition is preferably 0.5 mass% or more and 10 mass% or less, and more preferably 1 mass% or more and 5 mass% or less. Furthermore, the content of the thickener is preferably 0.5 parts by mass or more and 20 parts by mass or less, and more preferably 1 part by mass or more and 10 parts by mass or less per 100 parts by mass of the content of the iron powder.

### (Other components)

The oxygen scavenger composition of the present invention may contain other components as necessary besides the components listed above. Examples of other components include a fluidity improver, a catalyst, an odor adsorbent, and a thermal dispersant.

### <Shape of oxygen scavenger composition>

The shape of the oxygen scavenger composition of the present invention is not particularly limited, and is preferably a granule.

Here, the granule may either be an agglomerated particle or a granulated material.

Examples of the particle shape include spherical, substantially spherical, elliptical, and cylindrical shapes, and the shape is preferably spherical or substantially spherical, and more preferably spherical, because of the tendency to have more excellent filling properties and a higher bulk density.

The average particle diameter of the oxygen scavenger composition of the present invention is not particularly limited, but is preferably 0.3 mm or more and 5.0 mm or less, and more preferably 0.5 mm or more and 2.0 mm or less. When the average particle diameter is 0.3 mm or more, adhesion to a powder-contacting portion of a packaging machine due to static electricity or the like during filling and packaging can be suppressed, and when the average particle diameter is 5.0 mm or less, a decrease in the amount of oxygen absorbed per unit volume due to an increased gap between particles can be suppressed. The oxygen scavenger composition having an average particle diameter within the range set forth above can be obtained by sieving using, for example, sieves having openings of 0.3 mm and 5.0 mm.

Note that, the average particle diameter of the oxygen scavenger composition can be measured by the method described in Examples.

### <Characteristics of oxygen scavenger composition>

The oxygen scavenger composition of the present invention preferably exhibits an intermediate water activity.

A numerical value of water activity closer to 1 indicated that the vapor pressure of water evaporated from the oxygen scavenger composition is closer to the vapor pressure of pure water.

The water activity of the oxygen scavenger composition of the present invention is preferably 0.40 or more and 0.60 or less, more preferably 0.45 or more and 0.60 or less, and still more preferably 0.47 or more and 0.59 or less, which is so-called intermediate water activity.

Note that, the method for measuring the water activity is not particularly limited, and the water activity can be measured using a known instrument such as a dew point type water activity meter, and specifically, the water activity can be measured by the method described in Examples.

Usually, when an article is stored in a sealed state, the larger the difference in water activity between the stored article and the oxygen scavenger composition, the more likely the moisture migration occurs. For this reason, from the viewpoint of suppressing the moisture migration, the water activity of the oxygen scavenger composition is preferably comparable to the water activity of the stored article.

The oxygen scavenger composition of the present invention exhibits an intermediate water activity, and hence is suitably used for preservation of a stored article exhibiting an intermediate water activity.

Examples of the stored article for which the oxygen scavenger composition of the present invention is suitable include: food such as rice/mixed grains, spices, dried bonito flakes/dried sardines, and dried edible seaweed; industrial products such as electronic components with solder joints, metal screws, and metal blades such as razors; pharmaceuticals such as compressed tablets, crude drugs, and bulk drugs with hydrolysis concern; and various articles. Among them, the oxygen scavenger composition is suitably used for preservation of pharmaceuticals.

### [Method for producing oxygen scavenger composition]

The method for producing the oxygen scavenger composition of the present invention is not particularly limited, but preferably includes a step of mixing iron powder, an alkaline earth metal halide, water, an alkaline substance, a water-retaining carrier, and one or more water-soluble solvents selected from the group consisting of monohydric to trihydric alcohols (excluding a polyether polyols) each having a molecular weight of 100 or less and polyethers each having a number average molecular weight of 900 or less.

According to such a production method, a granule is prepared by mixing iron powder, an alkaline earth metal halide, water, an alkaline substance, a water-retaining carrier, and a predetermined water-soluble solvent until they are uniformly dispersed, and the oxygen scavenger composition can be efficiently prepared.

The mixing step is not particularly limited, and may be (1) a step of mixing all the components at once, or (2) a step in which all the components are divided into several groups to prepare several mixtures in advance and the mixtures are finally mixed all together.

More preferably, the method for producing the oxygen scavenger composition of the present invention includes: step (I) of obtaining a solution containing an alkaline earth metal halide, water, and one or more water-soluble solvents selected from the group consisting of monohydric to trihydric alcohols (excluding polyether polyols) each having a molecular weight of 100 or less and polyethers each having a number average molecular weight of 900 or less; step (II) of obtaining a mixture containing iron powder, a water-retaining carrier, and an alkaline substance; and step (III) of mixing the mixture and the solution.

According to such a production method, it is presumable that a more homogeneous oxygen scavenger composition can be obtained, and in particular, precipitation of a reaction product derived from the alkaline earth metal halide and the alkaline substance can be effectively suppressed.

The mixing method is not particularly limited, and can be performed by shaking and mixing, mixing with a mixing device, or the like. Specific examples of the mixing device include a Nauta mixer (available from Hosokawa Micron Corporation), a conical mixer (available from Ohno Chemical Machine Co., Ltd.), a vertical granulator (available from Powrex Corporation), a high-speed mixer (available from EARTHTECHNICA CO., LTD.), and a granulator (available from AKIRAKIKO Co., Ltd.).

Since iron, which is a main agent in the oxygen scavenger, reacts with oxygen, the reaction with oxygen progresses gradually even in the absence of water, an alkaline earth metal halide, or the like. For this reason, the mixing is preferably performed in an inert atmosphere (in a case where a substantially sealed system is created, an inert gas (such as N₂) atmosphere without oxygen is typically created in the system), and heat removal is preferably implemented as appropriate.

### [Oxygen scavenger package]

The oxygen scavenger package of the present invention includes the oxygen scavenger composition described above and an air-permeable packaging material accommodating the oxygen scavenger composition.

### (Packaging material)

Examples of the packaging material include a packaging material having a bag shape formed by affixing two sheets of an air-permeable packaging material to each other, a packaging material having a bag shape formed by affixing one sheet of an air-permeable packaging material to one sheet of a non-air-permeable packaging material, and a packaging material having a bag shape formed by folding one sheet of an air-permeable packaging material and sealing edges other than the folded portion.

Here, when the air-permeable packaging material and the non-air-permeable packaging material each have a quadrilateral shape, examples of the packaging material include a packaging material having a bag shape formed by overlapping 2 sheets of an air-permeable packaging material and heat-sealing their 4 sides, a packaging material having a bag shape formed by overlapping 1 sheet of an air-permeable packaging material and 1 sheet of a non-air-permeable packaging material and heat-sealing their 4 sides, and a packaging material having a bag shape formed by folding 1 sheet of an air-permeable packaging material and heat-sealing its 3 sides other than the folded portion. Furthermore, the packaging material may be a packaging material having a bag shape formed by forming an air-permeable packaging material into a tubular shape and heat-sealing the both ends and body of the resulting tubular body.

### (Air-permeable packaging material)

As the air-permeable packaging material, a packaging material through which oxygen and carbon dioxide permeate is selected. Among them, packaging materials suitably used are those having an air resistance of preferably 40000 seconds or less, more preferably 30000 seconds or less, still more preferably 20000 seconds or less, even more preferably 10000 seconds or less, and preferably 500 seconds or more, more preferably 1000 seconds or more as measured by an Oken-type tester method. Here, the air resistance refers to a value measured by a method in accordance with JIS P8117:2009. More specifically, the air resistance can be measured by the method described in Examples.

As the air-permeable packaging material, there is used air-permeable plastic film, besides paper and nonwoven fabric. Examples of the plastic film include a laminate film in which a film of polyethylene terephthalate, polyamide, polypropylene, polycarbonate, or the like is laminated and bonded to a sealing layer such as a film of polyethylene, an ionomer, polybutadiene, ethylene-acrylic acid copolymer, ethylene-methacrylic acid copolymer, ethylene vinyl acetate copolymer, or the like. In addition, laminates of these can also be used as the air-permeable packaging material, and for example, a laminate such as a linear low-density polyethylene perforated film/paper/polyethylene terephthalate perforated film is suitably used.

As the method of imparting air permeability, various methods can be employed, besides perforation processing with cold needles or heated needles. When air permeability is imparted by perforation, the air permeability can be freely adjusted by perforation diameter, perforation number, a material, and the like.

The thickness of the laminate film is preferably 30 µm or more and 300 µm or less, and more preferably 40 µm or more and 250 µm or less. In this case, as compared to a case where the thickness is out of the range set forth above, there can be formed a packaging material that retains strength and has an excellent heat-sealing property and packaging suitability.

### (Intended use of oxygen scavenger package)

The oxygen scavenger package of the present invention contains the oxygen scavenger composition of the present invention, and hence exhibits an intermediate water activity, is excellent in oxygen absorption performance, and generates a small amount of hydrogen. For this reason, the oxygen scavenger package is suitably used for preservation of a stored article exhibiting an intermediate water activity.

Specifically, the oxygen scavenger package of the present invention is suitably used in a method for removing oxygen in a space inside a gas barrier container accommodating a stored article exhibiting an intermediate water activity. According to such a method, the moisture migration from the oxygen scavenger package to the stored article can be suppressed, and moreover, oxygen in the space inside a gas barrier container can be efficiently removed, so that the quality of the stored article can be favorably maintained.

When the oxygen scavenger package of the present invention is used, a package including the oxygen scavenger package, a stored article, and a gas barrier container accommodating these is preferably used. At this time, the humidity in the space inside the gas barrier container is preferably 40% relative humidity or more and 60% relative humidity or less from the viewpoint of maintaining the quality of the stored article. The stored article is preferably one or more selected from food, industrial products, and pharmaceuticals, and more preferably a pharmaceutical.

Despite the embodiments of the present invention described above, the present invention is not limited to the above-described embodiments, and includes all aspects included in the concept and scope of claim of the present invention, and can be variously modified within the scope of the present invention.

### Examples

Hereinafter, the present embodiment will be described in detail with Examples and Comparative Examples, but the present embodiment can be modified as appropriate as long as the functions and effects of the present invention are exhibited.

### <Material>

Materials and the like used in Examples and Comparative Examples are listed below.
· Iron powder: average particle diameter: 100 µm, specific surface area: 0.104 m²/g
· Calcium chloride (CaCl₂): Guaranteed Reagent, available from FUJIFILM Wako Pure Chemical Corporation
· Calcium hydroxide (Ca(OH)₂): Guaranteed Reagent, available from FUJIFILM Wako Pure Chemical Corporation
· Activated carbon: "Shirasagi A" available from Osaka Gas Chemicals Co., Ltd., powder form, average particle diameter: 10 µm
· Diatomaceous earth: "CG-2U" available from Isolite Insulating Products Co., Ltd., powder form, average particle diameter: 0.44 µm
· Calcium bentonite: "Neokunibond" available from KUNIMINE INDUSTRIES CO., LTD., average particle diameter: 32.7 µm, which is indicated as "Bentonite" in Table 2.
· Carboxymethyl cellulose sodium: "Sunrose F350HC-4" available from NIPPON PAPER Chemicals CO., LTD., average particle diameter: 29 µm, which is indicated as "CMC" in Table 2.
· Glycerin: Guaranteed Reagent, available from FUJIFILM Wako Pure Chemical Corporation
· Polyethylene glycol 400: available from FUJIFILM Wako Pure Chemical Corporation, Wako 1st Grade, number average molecular weight: from 360 to 440 (catalog value), hereinafter referred to as "PEG 400".
· Polyethylene glycol 1000: available from FUJIFILM Wako Pure Chemical Corporation, Wako 1st Grade, number average molecular weight: from 900 to 1100 (catalog value), hereinafter referred to as "PEG 1000".
· Polyethylene glycol 4000: available from FUJIFILM Wako Pure Chemical Corporation, Wako 1st Grade, number average molecular weight: from 2700 to 3300 (catalog value), hereinafter referred to as "PEG 4000".
· Ethanol (99.5): Guaranteed Reagent, available from FUJIFILM Wako Pure Chemical Corporation
· D(-)-Sorbitol: available from FUJIFILM Wako Pure Chemical Corporation, Wako 1st Grade, hereinafter referred to as "sorbitol".
· Air-permeable packaging material A: Bag-shaped packaging material having an outer dimension of 40 mm × 30 mm

The air-permeable packaging material A was produced by using a multilayer sheet (thickness: 52 µm, air resistance: 5300 seconds) having a configuration of linear low density polyethylene (perforated film, thickness: 30 µm, hereinafter simply referred to as "LLDPE")/paper (grammage: 50 g/m²)/polyethylene terephthalate (perforated film, thickness: 12 µm, hereinafter referred to as "PET"), bending the multilayer sheet such that the LLDPE was on the inner side, and heat-sealing three sides thereof with a seal width of 5 mm such that one side was an opening.
· Air-permeable packaging material B: Bag-shaped packaging material having an outer dimension of 100 mm × 70 mm

The air-permeable packaging material B was produced by using a multilayer sheet (thickness: 39 µm, air resistance: 10 seconds) having a configuration of LLDPE (same as above)/paper (same as above), bending the multilayer sheet such that the LLDPE was on the inner side, and heat-sealing three sides thereof with a seal width of 5 mm such that one side was an opening.

### <Measurement method>

The physical properties were measured by the following methods.

### [Measurement of average particle diameter of iron powder]

The average particle diameter of the iron powder was measured with a standard sieve in accordance with ISO 3310-1:2000 (corresponding to JIS Z8801-1:2006) to determine the 50% cumulative average particle diameter (D50) based on the weight fraction by size of a sieve opening after vibration for 5 minutes.

### [Specific surface area of iron powder]

The specific surface area (unit: m²/g) of the iron powder was measured based on multipoint BET method in accordance with JIS Z8830:2013.

### [Average particle diameter of components other than iron powder]

The average particle diameter of each of the components other than iron powder was measured with a laser diffraction/scattering particle size distribution analyzer ("LA-960" available from HORIBA, Ltd.) to determine the 50% cumulative average particle diameter (D50) in the volume-based particle size distribution.

### [Air resistance of multilayer sheet]

The air resistance of the multilayer sheet was measured three times using a digital Oken type air-permeability tester ("EG02" available from Asahi Seiko Co., Ltd.). The arithmetic average value of the obtained results was used as the measurement result.

### <Preparation of oxygen scavenger composition and oxygen scavenger package using the same>

### (Example 1)

### [1] Preparation of oxygen scavenger composition

First, 16.1 g of calcium chloride (CaCl₂) as an alkaline earth metal halide was dissolved in 29.6 g of water to prepare an aqueous calcium chloride solution. Subsequently, 1.6 g of glycerin as one of the monohydric to trihydric alcohols each having a molecular weight of 100 or less was added to the aqueous calcium chloride solution and the mixture was stirred to prepare an aqueous calcium chloride-glycerin solution.

Next, 80.0 g of iron powder, 15.1 g of diatomaceous earth and 7.4 g of activated carbon each as a water-retaining carrier, 0.8 g of calcium hydroxide (Ca(OH)₂) as an alkaline substance, and 3.0 g of calcium bentonite and 0.3 g of carboxymethyl cellulose sodium each as a thickener were placed in a 300 ml plastic container, and shaken and mixed to obtain a mixture.

Subsequently, the aqueous calcium chloride-glycerin solution was added to the mixture, and further shaken and mixed to afford an oxygen scavenger composition.

Note that, the resultant oxygen scavenger composition was a granule in which powder particles were aggregated (average particle diameter: 1.60 mm).

### [Average particle diameter of oxygen scavenger composition]

The average particle diameter of the oxygen scavenger composition was measured with the laser diffraction/scattering particle size distribution analyzer (as described above) to determine the 50% cumulative average particle diameter (D50) in the volume-based particle size distribution.

### [2] Preparation of oxygen scavenger package

### [2-1] Preparation of oxygen scavenger package A (sample for measuring the amount of oxygen absorbed)

An air-permeable packaging material A was filled with 0.8 g of the oxygen scavenger composition produced in the foregoing [1], and then the opening was sealed by heat-sealing with a seal width of 5 mm to prepare a bag-type oxygen scavenger package A.

Note that, the produced oxygen scavenger package A was placed in a gas barrier bag (a laminate of barrier nylon and LLDPE, available from Fukusuke Kogyo Co., Ltd.) having low oxygen permeability, with its opening being sealed by heat-sealing, and stored so as not to react with oxygen in the atmosphere until being subjected to the measurement of the amount of oxygen absorbed.

### [2-2] Preparation of oxygen scavenger package B (sample for measuring the amount of hydrogen generated)

An air-permeable packaging material B was filled with 25 g of the oxygen scavenger composition produced in the foregoing [1], and then the opening was sealed by heat-sealing with a seal width of 5 mm to prepare a bag-type oxygen scavenger package B.

Note that, the produced oxygen scavenger package B was placed in a gas barrier bag having low oxygen permeability (same as above), with the opening being sealed by heat-sealing, and stored so as not to react with oxygen in the atmosphere until being subjected to measurement of the amount of hydrogen generated.

### (Examples 2 to 4)

In Examples 2 to 4, an oxygen scavenger compositions and oxygen scavenger packages A and B were produced in the same manner as in Example 1 except that the blending amount of glycerin was changed to the values shown in Table 1.

### (Examples 5 and 6)

In Examples 5 and 6, oxygen scavenger compositions and oxygen scavenger packages A and B were produced in the same manner as in Example 1 except that PEG400, which is a polyether having a number average molecular weight of 900 or less, was used instead of glycerin and its blending amount was changed as shown in Table 1.

### (Examples 7 and 8)

In Examples 7 and 8, an oxygen scavenger compositions and oxygen scavenger packages A and B were produced in the same manner as in Example 1 except that ethanol, which is one of the monohydric to trihydric alcohols each having a molecular weight of 100 or less, was used instead of glycerin, and its blending amount was changed as shown in Table 1.

### (Comparative Example 1)

In Comparative Example 1, an oxygen scavenger compositions and oxygen scavenger packages A and B were produced in the same manner as in Example 1 except that no water-soluble solvent was used.

### (Comparative Example 2)

In Comparative Example 2, an oxygen scavenger composition and oxygen scavenger packages A and B were produced in the same manner as in Example 1 except that sorbitol, which is a hexahydric and water-soluble alcohol, was used instead of glycerin.

### (Comparative Examples 3 and 4)

In Comparative Examples 3 and 4, preparation of oxygen scavenger compositions was attempted by using PEG1000 and PEG4000, each of which is a polyether having a number average molecular weight of 1000 or more, instead of glycerin, and the blending amount thereof was changed as shown in Table 1. However, when a predetermined amount of PEG1000 or PEG4000 was added to the aqueous calcium chloride solution and the mixture was stirred, the mixture became creamy with high viscosity at room temperature (25°C), and no liquid aqueous solution was obtained. For this reason, PEG1000 and PEG4000 were determined to be unsuitable as materials for the oxygen scavenger composition, and further operations were discontinued.

### <Evaluation>

The following evaluations were performed by using the oxygen scavenger compositions and the oxygen scavenger packages A and B produced in Examples 1 to 8 and Comparative Examples 1 and 2. The results are shown in Table 1.

### (Water activity)

The measurement of water activity was performed by the following method using the oxygen scavenger compositions produced in the foregoing [1].

First, 1.0 g of the oxygen scavenger composition was put in a dedicated petri dish, and the measurement was performed at 25°C with a water activity measuring apparatus ("AquaLab TDL2" available from METER Group, Inc.) according to the predetermined procedure for the meter.

The measurement was performed three times, and the arithmetic average value of the obtained results was used and evaluated as a water activity value of the oxygen scavenger composition of each Example or Comparative Example.

In the present Examples, the water activity being within the range of 0.40 or more and 0.60 or less (intermediate water activity) was set to be good, and the water activity being close to the median value of 0.50 was rated as better. Note that, the value of the water activity in Table 1 was evaluated by rounding off to the third decimal point.

### (Amount of oxygen absorbed)

The measurement of the amount of oxygen absorbed was performed by the following method using the oxygen scavenger package A produced in the foregoing [2-1].

First, one oxygen scavenger package A was accommodated together with 1500 ml of air at 25°C in a gas barrier bag (available from Fukusuke Kogyo Co., Ltd., dimension: 250 mm × 400 mm, oxygen transmission rate: 7.3 ml/m²·day·atm) made of nylon/polyethylene laminate film, and the opening was sealed by heat-sealing. Furthermore, the oxygen concentration (initial oxygen concentration) in the gas barrier bag at this time was measured.

Thereafter, the gas barrier bag was immediately placed in a thermostatic bath at 25°C and held for 7 days, and the oxygen concentration (oxygen concentration after storage) in the gas barrier bag was measured at each of the 1-day, 3-day and 7-day elapsed time points, and the amount of oxygen absorbed (the initial oxygen concentration - the oxygen concentration after storage) was calculated. Furthermore, the calculated amount of oxygen absorbed was divided by the mass (unit: g) of the iron powder in the oxygen scavenger composition to calculate the amount of oxygen absorbed (unit: ml/1 g of iron powder) per unit mass of the iron powder at each elapsed time point.

Note that, the oxygen concentration was measured with a gas analyzer ("Check Mate 3" available from MOCON, Inc.). The measurement was performed in a way that a hollow needle at the tip of a silicon tube for sampling attached to the gas analyzer was inserted through a rubber sheet for sampling (25 mm × 25 mm, thickness: 2 mm) in advance attached to the gas barrier bag into the gas barrier bag, thereby measuring the oxygen concentration in the gas barrier bag.

The measurement was performed three times at each time point, and the arithmetic average value of the obtained results was used and evaluated as the amount of oxygen absorbed of the oxygen scavenger composition of each Example or Comparative Example. A greater amount of oxygen absorbed indicates better oxygen absorption performance.

In the present Examples, a sample having an amount of oxygen absorbed per unit mass of iron powder of 190.0 [ml/1 g of iron powder] or more at the 3-day elapsed time point was rated as good, and a sample having an amount of oxygen absorption of 200.0 [ml/1 g of iron powder] or more was rated as better. Moreover, from the viewpoint of being capable of rapidly exhibiting oxygen absorption performance even in a short period of time, a sample having an amount of oxygen absorbed per unit mass of the iron powder of 130.0 [ml/1 g of iron powder] or more at the 1-day elapsed time point was rated as even better.

### (Amount of hydrogen generated)

The measurement of the amount of hydrogen generated was performed by the following method using the oxygen scavenger package B produced in the foregoing [2-2].

First, one oxygen scavenger package B was accommodated together with 25 ml of air at 35°C in a gas barrier bag (available from Meiwa Pax Co., Ltd., dimension: 175 mm × 250 mm, oxygen transmission rate: 0.1 ml/m²·day·atm or less) made of nylon/aluminum foil/polyethylene laminate film, and the opening was sealed by heat-sealing.

Thereafter, the gas barrier bag was immediately placed in a thermostatic bath at 35°C and held for 72 hours, and then the hydrogen concentration in the gas barrier bag was measured by gas chromatography, thereby calculating the amount of hydrogen generated (unit: ml). Furthermore, the calculated amount of hydrogen generated was divided by the mass (unit: g) of the iron powder in the oxygen scavenger composition to calculate the amount of hydrogen generated (unit: ml/1 g of iron powder) per unit mass of the iron powder.

Note that, the hydrogen concentration was measured with a gas chromatograph ("GC-14A" available from Shimadzu Corporation).

The measurement was performed three times, and the arithmetic average value of the obtained results was used and evaluated as the amount of hydrogen generated of the oxygen scavenger composition of each Example or Comparative Example. A smaller amount of hydrogen generated indicates that generation of hydrogen is more effectively suppressed. In the present Examples, a sample having an amount of hydrogen generated per unit mass of iron powder of 0.020 [ml/1 g of iron powder] or less was rated as good.

Note that, the oxygen scavenger package B was produced to be more suitable for the evaluation of the amount of hydrogen generated.

### [Table 1]

**Table 1**

| | Water-soluble solvent | | | | | Water activity | Amount of hydrogen generated | Amount of oxygen absorbed | | |
|---|---|---|---|---|---|---|---|---|---|---|
| | Type | Blending amount | In Composition | Per 100 parts by mass of iron | Per 100 parts by mass of water | | ml/1 g of iron powder | 1 day later | 3 days later | 7 days later |
| | - | g | mass% | parts by mass | parts by mass | | | ml/1 g of iron powder | | |
| Example 1 | Glycerin | 1.6 | 1.0 | 2.0 | 5.4 | 0.511 | 0.012 | 164.0 | 196.9 | 206.4 |
| Example 2 | Glycerin | 3.2 | 2.1 | 4.0 | 10.8 | 0.519 | 0.010 | 176.8 | 208.5 | 215.3 |
| Example 3 | Glycerin | 8.0 | 5.1 | 10.0 | 27.0 | 0.553 | 0.002 | 163.6 | 210.7 | 227.6 |
| Example 4 | Glycerin | 16.0 | 10.3 | 20.0 | 54.0 | 0.584 | 0.002 | 131.8 | 233.1 | 255.0 |
| Example 5 | PEG400 | 3.2 | 2.1 | 4.0 | 10.8 | 0.521 | 0.008 | 164.3 | 200.3 | 214.0 |
| Example 6 | PEG400 | 13.9 | 8.9 | 17.4 | 46.9 | 0.573 | 0.003 | 125.5 | 244.6 | 283.2 |
| Example 7 | Ethanol | 1.6 | 1.0 | 2.0 | 5.4 | 0.497 | 0.013 | 239.6 | 276.8 | 291.1 |
| Example 8 | Ethanol | 3.2 | 2.1 | 4.0 | 10.8 | 0.500 | 0.014 | 196.9 | 235.9 | 249.1 |
| Comparative Example 1 | - | - | - | - | - | 0.505 | 0.027 | 126.3 | 170.5 | 192.2 |
| Comparative Example 2 | Sorbitol | 1.6 | 1.0 | 2.0 | 5.4 | 0.553 | 0.046 | 159.5 | 188.1 | 206.9 |
| Comparative Example 3 | PEG1000 | 3.2 | 2.1 | 4.0 | 10.8 | Not measurable | | | | |
| Comparative Example 4 | PEG4000 | 3.2 | 2.1 | 4.0 | 10.8 | Not measurable | | | | |

Note that, the blending compositions of the oxygen scavenger compositions produced in Examples 1 to 8 and Comparative Examples 1 and 2 are shown in Table 2 below. Note that, in Comparative Examples 3 and 4, no oxygen scavenger compositions were obtained, but the blending compositions are as shown in Table 2 below.

### [Table 2]

**Table 2**

| | | Blending composition | | | |
|---|---|---|---|---|---|
| | | Blending amount | Per 100 parts by mass of iron powder | Per 100 parts by mass of water | Per 100 parts by mass of water-retaining carrier |
| | | g | parts by mass | parts by mass | parts by mass |
| | Iron powder | 80.0 | 100.0 | 270.0 | 356.0 |
| | Diatomaceous earth | 15.1 | 18.8 | 50.8 | 67.0 |
| | Activated carbon | 7.4 | 9.3 | 25.0 | 33.0 |
| | Bentonite | 3.0 | 3.7 | 10.0 | 13.2 |
| Component | CMC | 0.3 | 0.4 | 1.0 | 1.3 |
| | Calcium hydroxide | 0.8 | 1.1 | 2.8 | 3.7 |
| | Calcium chloride | 16.1 | 20.2 | 54.4 | 71.8 |
| | Water | 29.6 | 37.0 | 100.0 | 131.9 |
| | Water-soluble solvent | As listed in Table 1 | | | - |

As shown in Table 1, it has been confirmed that an oxygen scavenger composition containing iron powder, an alkaline earth metal halide, water, an alkaline substance, a water-retaining carrier, and a predetermined water-soluble solvent, in which the contents of the alkaline earth metal halide and the predetermined water-soluble solvent each are within a predetermined range, exhibits an intermediate water activity, is excellent in oxygen absorption performance, and generates a small amount of hydrogen (Examples 1 to 8).

In contrast, it has been confirmed that the amount of hydrogen generated was large and the amount of oxygen absorbed was small when no water-soluble solvent was contained (Comparative Example 1), and when the water-soluble solvent was sorbitol which was not a predetermined component specified in the present invention (Comparative Example 2).

Moreover, as described above, PEG1000 and PEG4000, each of which is a water-soluble solvent that is not a predetermined component specified in the present invention, have been confirmed to be unsuitable as materials for the oxygen scavenger composition (Comparative Examples 3 and 4).

## Claims

1. An oxygen scavenger composition comprises iron powder, an alkaline earth metal halide, water, an alkaline substance, a water-retaining carrier, and one or more water-soluble solvents selected from the group consisting of monohydric to trihydric alcohols (excluding polyether polyols) each having a molecular weight of 100 or less and polyethers each having a number average molecular weight of 900 or less,
wherein a content of the alkaline earth metal halide is 30 parts by mass or more and 80 parts by mass or less per 100 parts by mass of a content of the water, and
a content of the water-soluble solvent is 2 parts by mass or more and 80 parts by mass or less per 100 parts by mass of the content of the water.

2. The oxygen scavenger composition according to claim 1, wherein the water-soluble solvent is one or more selected from the group consisting of methanol, ethanol, propanol, propanediol, glycerin, butanol, butanediol, and polyethylene glycol and polypropylene glycol each having a number average molecular weight of 900 or less.

3. The oxygen scavenger composition according to claim 1 or 2, wherein the alkaline substance is one or more selected from the group consisting of alkali metal hydroxides and alkaline earth metal hydroxides.

4. The oxygen scavenger composition according to any one of claims 1 to 3, wherein the alkaline substance is calcium hydroxide.

5. The oxygen scavenger composition according to any one of claims 1 to 4, wherein the alkaline earth metal halide is one or more selected from the group consisting of calcium chloride, magnesium chloride, magnesium bromide, and calcium bromide.

6. The oxygen scavenger composition according to any one of claims 1 to 5, wherein the water-retaining carrier is one or more selected from the group consisting of diatomaceous earth, silica, and activated carbon.

7. The oxygen scavenger composition according to any one of claims 1 to 6, wherein a content of the water-retaining carrier is 15 parts by mass or more and 50 parts by mass or less per 100 parts by mass of a content of the iron powder.

8. The oxygen scavenger composition according to any one of claims 1 to 7, wherein the content of the water is 60 parts by mass or more and 370 parts by mass or less per 100 parts by mass of the content of the water-retaining carrier.

9. The oxygen scavenger composition according to any one of claims 1 to 8, further comprising a thickener, wherein the thickener is one or more selected from the group consisting of carboxymethyl cellulose calcium, carboxymethyl cellulose sodium, calcium bentonite, and sodium bentonite.

10. The oxygen scavenger composition according to claim 9, wherein a content of the thickener is 5 parts by mass or more and 20 parts by mass or less per 100 parts by mass of the content of the water.

11. An oxygen scavenger package comprising: the oxygen scavenger composition according to any one of claims 1 to 10; and an air-permeable packaging material accommodating the oxygen scavenger composition.

12. A method for producing an oxygen scavenger composition, the method for producing the oxygen scavenger composition described in any one of claims 1 to 10, the method comprising:
step (I) of obtaining a solution containing an alkaline earth metal halide, water, and one or more water-soluble solvents selected from the group consisting of monohydric to trihydric alcohols (excluding polyether polyols) each having a molecular weight of 100 or less and polyethers each having a number average molecular weight of 900 or less;
step (II) of obtaining a mixture containing iron powder, a water-retaining carrier, and an alkaline substance; and
step (III) of mixing the mixture with the solution.
